Europäisches Patentamt

European Patent Office

Office européen des brevets

(11) Publication number: **0 434 259 A1**

# EUROPEAN PATENT APPLICATION

(21) Application number: 90313213.2

(22) Date of filing: 06.12.90

(51) Int. Cl.⁵: **G05D 7/06**, A01M 7/00, B05B 9/08

(30) Priority: 19.12.89 EP 89313246

(43) Date of publication of application:
26.06.91 Bulletin 91/26

(84) Designated Contracting States:
AT BE CH DE DK ES FR GB GR IT LI LU NL SE

(71) Applicant: NOMIX MANUFACTURING COMPANY LIMITED
Portland Building Portland Street
Staple Hill Bristol BS16 4PS(GB)

(72) Inventor: Gill, David Charles
Wellfield House, Parkhouse Lane
Keynsham, Bristol(GB)

(74) Representative: Cheyne, John Robert
Alexander Mackenzie et al
HASELTINE LAKE & CO. Hazlitt House 28,
Southampton Buildings Chancery Lane
London WC2A 1AT(GB)

(54) Electronic control of fluid flow rate.

(57) There is disclosed a control apparatus for a fluid delivery system. A first input signal corresponding to a desired flow rate of fluid is input into the control apparatus. A control signal is then sent to the fluid delivery system on the basis of the input signal for the duration of a calibration test. After the test, a second input signal, corresponding to the actual flow rate obtained during the test, is input to the control apparatus. The control signal is then amended in view of the second input. Also disclosed is spraying equipment incorporating such a control apparatus.

The fluid delivery system may be a pump, or may alternatively be a fluid container, having a flexible bag within a rigid box and being connected to a supply of pressurised air for forcing fluid out of the bag.

*Fig. 1.*

## ELECTRONIC CONTROL OF FLUID FLOW RATE

This invention relates to control apparatus for fluid distribution apparatus, and to spraying equipment incorporating such control apparatus.

When distributing a fluid, for example when spraying a herbicide, it is often necessary to control accurately the flow rate of the fluid. It is well known to distribute such herbicides using spraying equipment which incorporates a pump, the speed of which depends on the magnitude of control signals supplied to the pump. It is, however, also well known that it is difficult accurately to control the fluid flow rate in this way. A first problem is that the characteristics of the pump will tend to vary over time, meaning that the fluid flow rate produced from a particular control signal will change. A second problem is that different herbicides have different flow properties resulting from, for example, different viscosities. This too means that a given control signal will produce a different flow rate depending upon the fluid which is being pumped.

Moreover, such herbicides are suspensions, rather than solutions, and are usually supplied at very low flow rates, for example of the order of tens of millilitres per minute. As a result, it is very difficult to provide a flow meter which can provide an accurate indication of the actual rate of flow such that a feedback system can be used to control the pump speed.

It has also been proposed that fluid might be distributed from a bag-in-a-box container by supplying a pressurised fluid such as air to the box outside the bag. Again this method has the drawback that a particular applied pressure will not always produce the same fluid flow rate, because of differences in the fluid or because the relationship between the air supply and the fluid flow rate may not be known exactly.

Conventionally, therefore, a calibration test is carried out before spraying begins. When a pump is being used, the pump is operated for a fixed period of time, as measured by the operator of the equipment, and the fluid delivered during that period of time is collected in a calibration vessel, from which its volume can be measured. This volume is then used to calculate the actual flow rate during the calibration test, and that flow rate is then compared with the desired flow rate. If the actual flow rate differs from the desired flow rate, an adjustment can be made to increase or decrease the flow rate as required. A calibration device for use in this method is disclosed in EP-A-0297803.

However, this known method has the disadvantage that the initial rate of flow supplied by the pump can be quite inaccurate for the reasons mentioned above, while it is left to the operator to guess what degree of adjustment might be required in order to produce the desired flow rate. Since operators of the equipment are often unwilling to carry out repeated calibration tests, it is quite likely that the spraying equipment will be used without having been calibrated particularly accurately.

It is therefore an object of the present invention to improve the known control apparatus such that calibration can be carried out more accurately and quickly.

According to a first aspect of the present invention, there is provided a control apparatus for a fluid delivery system, the control apparatus including a processing unit and being adapted to receive a first input signal corresponding to a desired flow rate of fluid from the delivery system, and a second input signal corresponding to an actual rate of flow of fluid from the delivery system, and being adapted to supply a control signal to a delivery system, wherein, in a first phase of operation, the control apparatus supplies a first control signal on the basis of the value of the first input signal and wherein, in a second phase of operation, when the second input signal corresponds to the actual flow rate of fluid supplied by the delivery system in response to the first control signal during the first phase of operation, the control apparatus supplies a second control signal calculated by the processing unit, the second control signal differing from the first control signal to an extent which is determined by the difference between the flow rates corresponding to the first and second input signals.

Thus, before the second phase of operation, the operator supplies a second input signal which gives the control apparatus a quantitative indication of the difference between the desired flow rate and the actual flow rate produced by the first control signal. Hence, the control apparatus is able to provide a second control signal which produces a flow rate more closely approximating the desired flow rate. The second control signal can be used during spraying, or the resulting flow rate can be used during a repetition of the second phase of operation to achieve a third control signal yielding a flow rate even closer to the desired flow rate.

In a preferred embodiment of the invention, the control apparatus includes an electronic memory, in which are stored a plurality of first control signals and respective corresponding first input signals, wherein, in the first phase of operation, the first control signal which is supplied is the stored first control signal corresponding to the first input signal.

In a further preferred embodiment, the control apparatus is adapted to receive a third input signal corresponding to the fluid which is to be supplied from the pump, wherein the electronic memory contains a plurality of first control signals corresponding to each stored input signal and wherein the first control signal which is output depends on the third input signal.

Using this arrangement, the control signals which are output can be specific to the fluid which is being used. As a result, inaccuracies arising from the different flow characteristics of different fluids can be largely eliminated.

Preferably, when a second control signal output during a second phase of operation differs from the first control signal output during the associated first phase of operation, the stored first control signal is subsequently replaced in the memory by a new first control signal having the same value as the output second control signal.

The effect of this is that, over time, stored control signals which lead to inaccurate flow rates will be replaced by control signals which lead to more accurate flow rates, and thus the apparatus will be able to adapt to changing pump characteristics. Moreover, the fact that a stored control signal is a control signal which has previously produced an accurate flow rate, means that, at a later stage, it may not be necessary to repeat a calibration test, and thus that calibration can be carried out quickly.

According to a second aspect of the present invention, there is provided spraying equipment comprising an electric pump, an input device, and a control apparatus as defined above, the control apparatus being adapted to supply control signals suitable for operating the pump and the input device being adapted to supply input signals to the control apparatus.

According to a third aspect of the present invention, there is provided spraying equipment comprising: a container for working fluid in the form of a flexible bag located within a rigid box; a pressurised fluid supply connected to the box such that pressurised fluid supplied to the box tends to force working fluid out of the bag; an input device; and a control apparatus according to the first aspect of the invention, the control apparatus being adapted to supply control signals for controlling the pressurised fluid supply and the input device being adapted to supply input signals to the control apparatus.

Preferably, the equipment according to the second or third aspect of the invention is of the hand-held sort, and comprises a handle, a shaft, and a spray head, wherein fluid is allowed to flow from the fluid delivery system along the shaft to the spray head only when a trigger on the handle is depressed, and wherein, when the trigger is depressed in the first phase of operation, a stop signal is provided after a fixed period of time.

The stop signal can be used to ensure that the calibration test during the first phase of operation lasts for the required time, which means that the measured volume of fluid which flows during the test will be a more accurate indication of the fluid flow rate.

Preferably, a calibration vessel is built into the shaft or the spray head, such that the volume of fluid flowing during the fixed period of time is easily measurable.

This has the advantage that the operator has no need to carry a separate calibration vessel for use during the calibration test, making the equipment more convenient to use.

For a better understanding of the present invention, and to show how it may be brought into effect, reference will now be made, by way of example, to the accompanying drawings, in which:-

Figure 1 shows spraying equipment according to the second aspect of the present invention;

Figure 2 is a block diagram of the control circuitry for the equipment shown in Figure 1, which incorporates the control apparatus according to the first aspect of the invention.

Figure 3 shows the handle of spraying equipment according to the third aspect of the invention.

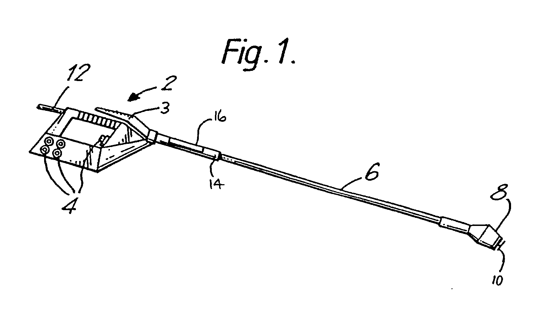

The equipment shown in Figure 1 comprises a hand-held herbicide delivery device, or lance, which is intended to be carried by an operator who walks over the ground which is to be treated. The lance comprises a handset 2 which is provided with a trigger 3 and appropriate operating controls 4. A rigid support member in the form of a tube 6 extends from that handset 2 and carries a delivery head 8. The head 8 accommodates an electric motor for driving a spinning disc 10. A tube 12 extends from the handset 2 for connection to a herbicide container. A calibration vessel 14 is built into the shaft 12 and includes a transparent wall portion 16 allowing the volume of fluid within the vessel to be seen easily.

In use of the equipment shown in Figure 1, actuation of the trigger 3 opens a valve (not shown) in the handset, to allow herbicide to flow from the tube 12 to the delivery head 8. Also, a micro-switch (not shown) is operated by actuation of the trigger 3 to supply electrical power to the electric motor in the head 8. Herbicide thus flows through the tube 12, the handset 2 and the tube 6 to head 8. From the head 8, the herbicide flows to the spinning disc 10, which discharges the herbicide by centrifugal force to form droplets which fall onto the ground. As disclosed in EP-A-0110713, the speed at which the disc 10 spins, and hence the width of the strip of land which can be treated, is variable. The operator uses an appropriate one of the controls 4 in order to set the desired spray width, and the disc speed is then controlled as required.

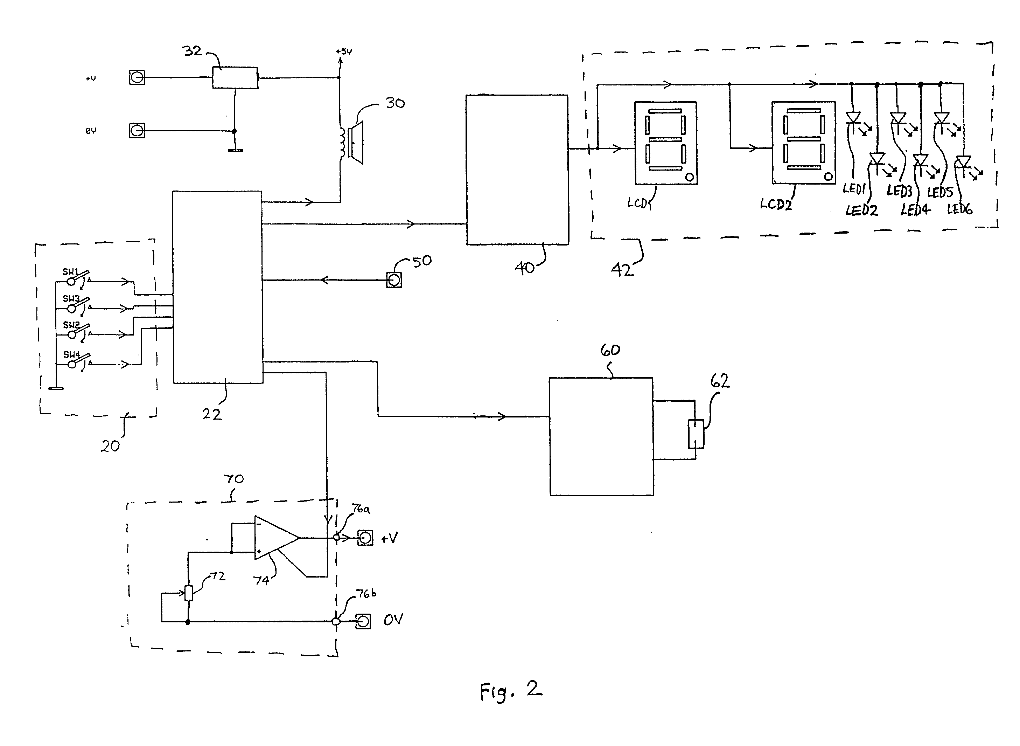

The circuitry shown in Figure 2 includes an input device 20, incorporating four switches SW1, SW2, SW3, SW4, connected to a micro-controller 22, incorporating a microprocessor and a memory device. The micro-controller is connected to an audible warning device 30, the voltage supply for which is provided by means of a battery and a voltage regulator 32. The micro-controller is also connected to a display driver 40, which is connected to a display unit 42 including liquid crystal displays LCD1, LCD2 and light emitting diodes LED1, LED2, LED3, LED4, LED5 and LED6. The micro-controller 22 is further connected to a valve switch 50, which is actuated by the trigger 3 on the hand-set 2. The micro-controller 22 is further connected to a pump motor drive circuit 60, which drives the pump motor 62. The micro-controller is further connected to a speed control circuit 70 for the disc motor (not shown). The circuit 70 includes a potentiometer 72, by means of which the set speed can be adjusted, and an amplifier 74, for providing the motor operating voltage at the terminals 76a, 76b.

When the equipment is first to be used, the operator uses switch SW2 to indicate that a desired flow rate is to be entered. Using a chart, which is specific to the herbicide being used, the operator then determines the desired flow rate on the basis of the required area concentration of the fluid, the width of a strip of land which is to be sprayed and the speed at which he intends to move along that strip of land. Having determined the desired flow rate, the operator inputs a value, which is expressed as a volume, namely the volume which is to be expected during a calibration test of fixed duration. The operator also gives an input which indicates the chemical which is to be used. In an alternative embodiment, the operator inputs individual signals relating to the different flow rate determining quantities, and the desired flow rate is retrieved by the micro-controller 22 from an electronic memory.

On the basis of the desired flow rate and the chemical which is to be used, the micro-processor retrieves from the electronic memory a control signal, which is to be output to the pump drive circuit 60. The pump motor 62 may be operated by, for example, pulse-width modulated signals, in which case the signal output from the micro-controller 22 will be indicative of the desired duty ratio of the pulses. Although it is difficult to measure directly the fluid flow rate with enough accuracy to allow it to be used in a feedback control system, the pump speed itself could be feedback controlled to a desired value. However, this would be of limited use here because recalibration before each use of the equipment will eliminate problems arising from long term changes in the characteristic of the pump by adjustment of the control signals.

When the operator is ready to begin the first phase of operation of the equipment, namely the initial calibration test, he depresses the trigger 3 on the handle 2, and a signal is sent from the switch 50 to the micro-controller 22. The required control signal is then sent to the drive circuit 60, and the pump motor 62 begins to operate. Fluid then flows along the tube 12 through the handle 2 into the flow cup 14 located on the shaft 6. After a predetermined time, such as thirty seconds, an audible stop signal is emitted from the audible output device 30, indicating to the operator that the test should end. The operator then releases the trigger 3, the pump motor is caused to stop rotating, and fluid stops flowing. The operator can then see the quantity of fluid which has entered the flow cup 14, which is described in more detail in, for example, European Patent Application No. 89308666.0, by means of a transparent wall section 16.

In an alternative embodiment, the micro-controller might be programmed such that, when a signal is received from the switch 50 in the calibration test mode, the pump motor 62 is automatically caused to operate for the fixed period of time, without requiring the operator to continue to depress the trigger, until an electronic stop signal causes the pump motor to stop.

When the test is completed, the operator reads the volume of fluid which has entered the flow cup 14, and compares it with the volume which was read from the chart. If the two volumes are the same, the equipment is already accurately calibrated, and spraying can begin. However, if the measured volume is different from the volume read from the chart, that measured volume is then entered using the switch SW4. The micro-controller is then able to make an appropriate adjustment to the control signal which is sent to the pump motor drive circuit 60. Because the micro-controller has received an input indicative of the desired flow rate, and an input indicative of the actual flow rate produced by the output first control signal, it is able to adjust the output control signal by an appropriate amount.

In the second phase of operation of the equipment, the calibration test is then repeated, and the volume of fluid which flows during the repeated test is read by the operator. In view of the fact that the operator has indicated by how much the flow rate during the first test differed from the desired flow rate, it is likely that the flow rate during the second test will be close to the desired flow rate. However, the test can be carried out for a third time if particularly high accuracy is required.

After each calibration test, the motor can be set into reverse, and fluid is then returned from the flow cup 14 to the fluid container (not shown) along the tube 12.

If any calibration test is repeated, to give a more accurate pump speed, the memory contents are adjusted so that, if future calibration tests are carried out requiring the same flow rate, the micro-controller 22 outputs the control signal which had given the accurate flow rate. Thus, the micro-controller 22 will, in effect, build its own graph of the control signals which are required for various flow rates, and these will be stored in a non-volatile memory such that they are saved even when the equipment is switched off. Moreover, since the operator has input a signal indicative of the fluid which is being sprayed, separate graphs can be stored for the different chemicals which may be used by the operator. In addition, if a series of calibration tests indicate that the pump is continually providing a flow rate which is different from the expected flow rate, this may be used by the micro-controller as an indication that the pump has worn, and thus all output signals from the micro-controller may be adjusted by a constant factor.

As described above, each calibration test is of a fixed duration, for example thirty seconds. However, there are advantages in adjusting the length of the calibration test in dependence on the required flow rate. Specifically, it is advantageous to use longer calibration tests for lower flow rates. This allows a relatively small flow cup to be used, for example an in-line flow cup 14 rather than a separate flow cup which has to be attached to the end of the spraying equipment, while ensuring that, even at low flow rates, the flow cup contains an easily and accurately measurable quantity of fluid.

Throughout each calibration test, and during the spraying operation, the status of the equipment, such as the input required flow rate, is indicated by the display device 42.

When the calibration is complete, and the flow rate obtained during a calibration test is as close as required to the desired flow rate, the actual spraying can begin. At this stage, as disclosed in EP-A-0256744, the operator also inputs the speed at which he intends to walk along the strip of land by means of switch SW1, and, during the spraying operation, the audible output device 30 will then produce tones which the operator can use to ensure that he is walking at the right speed. Then, when the trigger 3 is depressed, a signal from the switch 50 to the micro-controller 22 causes the control signal to be sent to the pump motor drive circuit 60, which operates the pump 62, for as long as the trigger 3 is depressed. Fluid thus flows at the required rate. At the same time, a signal is sent to the disc motor drive circuit 70, which drives the rotating disc 10 at the speed which is set on the potentiometer 72 in a known manner. Meanwhile, pacing signals are being emitted by the audible output means 30, thus allowing the operator more easily to walk at the required speed, to ensure the correct density of fluid per unit area.

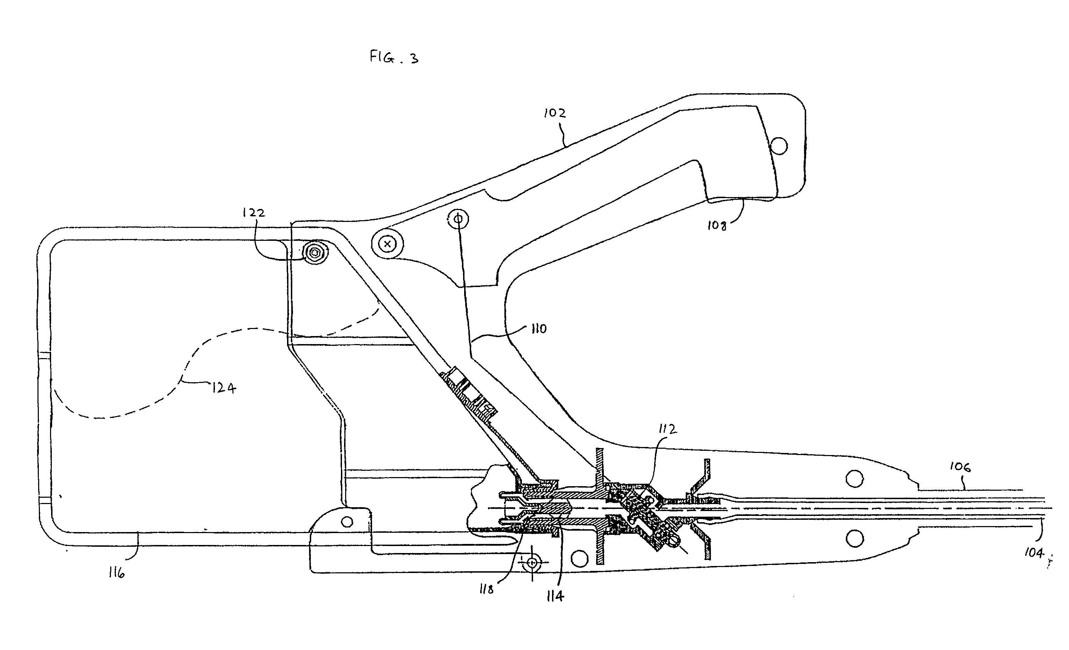

In Figure 3, there is shown a handle of spraying equipment in accordance with the third aspect of the invention. The handle 102 has a fluid outlet along pipe 104, which is mounted in a rigid support tube 106. At the end of the rigid support tube 106 is a spray head (not shown). Located in the handle 102 is a trigger 108. Depression of the trigger 108 causes a signal to be passed along line 110 to a valve 112. When the trigger 108 is depressed, the valve 112 opens, allowing fluid to flow from an inlet 114 along the outlet tube 104.

A fluid container 116 is mounted in the handle 102, in such a way that it is securely retained. When the container 116 is retained in its working position, its outlet valve 118 is opened, allowing fluid to flow into the inlet 114 on the handle.

The container 116 is of a known type (see e.g. GB-A-2207032), which has a rigid outer wall, and is provided with an internal flexible container for liquid. The container also has an inlet 122 for connection to a source of a pressurized fluid such as air. When the trigger 108 is depressed, compressed air is supplied via the air inlet 122 to the container 116. Because the air is supplied under pressure, it forces liquid within the container 116 out through the outlet 118. The dotted line 124 in Figure 3 shows the position at one particular moment of the edge of the flexible fluid container.

In order to maintain the fluid flow from the container 116 at the desired rate, it is necessary carefully to control the pressure of the air supplied via the inlet 122 and the rate at which air is supplied.

The handle 102 also contains electronic circuitry (not shown) for providing control signals to determine the rate at which air is supplied via the inlet 122. This control circuitry includes circuitry according to the first aspect of the present invention, for adjusting control signals supplied to the fluid delivery system, which may be in the form of a pump or a compressed gas canister, for controlling the rate at which fluid is supplied.

Thus, there is disclosed a control apparatus, with associated spraying equipment, which allows calibration to be carried out quickly and accurately, without requiring the operator to come into contact with the fluid which is to be used.

## Claims

1. A control apparatus (22) for a fluid delivery system, the control apparatus including a processing unit and being adapted to receive a first input signal corresponding to a desired flow rate of fluid from the delivery system, and a second input signal corresponding to an actual rate of flow of fluid from the delivery system, and being adapted to supply a control signal to a delivery system, wherein, in a first phase of operation, the control apparatus supplies a first control signal on the basis of the value of the first input signal and wherein, in a second phase of operation, when the second input signal corresponds to the actual flow rate of fluid supplied by the delivery system in response to the first control signal during the first phase of operation, the control apparatus supplies a second control signal calculated by the processing unit, the second control signal differing from the first control signal to an extent which is determined by the difference between the flow rates corresponding to the first and second input signals.

2. A control apparatus as claimed in claim 1, the control apparatus including an electronic memory, in which are stored a plurality of first control signals and respective corresponding first input signals, wherein, in the first phase of operation, the first control signal which is supplied is the stored first control signal corresponding to the first input signal.

3. A control apparatus as claimed in claim 2, adapted to receive a third input signal corresponding to the fluid which is to be supplied from the delivery system, wherein the electronic memory contains a plurality of first control signals corresponding to each stored first input signal and wherein the first control signal which is output depends on the third input signal.

4. A control apparatus as claimed in claim 2 or 3, wherein, when a second control signal output during a second phase of operation differs from the first control signal output during the associated first phase of operation, the stored first control signal is subsequently replaced in the memory by a new first control signal having the same value as the output second control signal.

5. Spraying equipment comprising an electric pump, an input device (20), and a control apparatus (22) as claimed in any preceding claim, the control apparatus being adapted to supply control signals suitable for operating the pump and the input device being adapted to supply input signals to the control apparatus.

6. Spraying equipment comprising: a container for working fluid in the form of a flexible bag located within a rigid box; a pressurised fluid supply connected to the box such that pressurised fluid supplied to the box tends to force working fluid out of the bag; an input device (20); and a control apparatus (22) as claimed in any one of claims 1 to 4, the control apparatus being adapted to supply control signals for controlling the pressurised fluid supply and the input device being adapted to supply input signals to the control apparatus.

7. Hand-held spraying equipment as claimed in claim 5 or 6 comprising a handle (2), a shaft (6), and a spray head (8), wherein fluid is allowed to flow from the fluid delivery system along the shaft to the spray head only when a trigger (3) on the handle (2) is depressed, and wherein, when the trigger (3) is depressed in the first phase of operation, a stop signal is provided after a fixed period of time.

8. Hand-held spraying equipment as claimed in claim 7, wherein a calibration vessel is built into the shaft, such that the volume of fluid flowing during the fixed period of time is easily measurable.

*Fig. 1.*

Fig. 2

EP 0 434 259 A1

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 291 332 (NOMIX MANUFACTURING COMPANY LIMITED)<br>* the whole document * | 1-8 | G 05<br>D 7/06<br>A 01 M 7/00<br>B 05 B 9/08 |
| Y | FR-A-2 371 005 (GRALL)<br>* the whole document * | 1,2,5,7 | |
| Y | EP-A-0 201 658 (AMAZONEN WERKE H. DREYER GMBH)<br>* abstract * * page 4, lines 3 - 30; claim 6 * | 3,4 | |
| D,Y | EP-A-0 297 803 (NOMIX MANUFACTURING COMPANY LIMITED)<br>* column 1, line 1 - column 2, line 48; figure 1 * | 8 | |
| D,Y | GB-A-2 207 032 (NOMIX MANUFACTURING COMPANY LIMITED)<br>* page 1, line 2 - page 2, line 36; figures 1-11 * | 6 | |
| A | EP-A-0 155 850 (NOMIX MANUFACTURING COMPANY LIMITED)<br>* page 1, line 1 - page 2, line 4; figure 14 * | 1-8 | TECHNICAL FIELDS SEARCHED (Int. Cl.5)<br><br>A 01 M<br>G 05<br>B |
| A | EP-A-0 191 287 (AMAZONEN WERKE H. DREYER GMBH)<br>* page 1, line 31 - page 2, line 32; figure 2 * | 1-8 | |
| A | EP-A-0 256 744 (NOMIX MANUFACTURING COMPANY LIMITED)<br>* the whole document * | 1-8 | |
| P,D,A | EP-A-0 358 287 (NOMIX MANUFACTURING COMPANY LIMITED)<br>* the whole document * | 1-8 | |

The present search report has been drawn up for all claims

| Place of search | Date of completion of search | Examiner |
|---|---|---|
| The Hague | 19 February 91 | SCHOBERT D.A.V. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document